# EUROPÄISCHE PATENTANMELDUNG

(11) **EP 2 631 433 A1**
(43) Veröffentlichungstag der Anmeldung: **28.08.2013**
(21) Anmeldenummer: 12157049.3
(22) Anmeldetag: 27.02.2012
(51) Int. Cl.: F01D 11/02, F16J 15/44, F16J 15/447, F16J 15/32, F16J 15/16

(54) **Axial verschiebbare Dichtvorrichtung einer Strömungsmaschine**

(71) Anmelder: Siemens Aktiengesellschaft, 80333 München (DE)
(72) Erfinder: Pötter, Rudolf, 45355 Essen (DE)

(57) **Zusammenfassung**

Eine Dichtvorrichtung (12) zur Abdichtung zweier axial voneinander beabstandeter Bereiche (6, 8) einer Strömungsmaschine (1) gegeneinander soll einen höheren Wirkungsgrad der Strömungsmaschine bei geringerer technischer Komplexität erlauben. Dazu umfasst sie eine Labyrinthdichtung (10) mit einem ersten an einer Welle (2) der Strömungsmaschine (1) angeordneten Formteil (14) und einem zweiten, an einem Gehäuse (4) der Strömungsmaschine (1) axial verschiebbar angeordneten Formteil (16), wobei das zweite Formteil (16) einen sich in das Gehäuse (4) erstreckenden Fortsatz (18) aufweist, wobei eine dem ersten Bereich (6) zugewandte erste Oberfläche (28) des Fortsatzes (18) eine erste druckregelbare Kammer (24) begrenzt und eine dem zweiten Bereich (8) zugewandte zweite Oberfläche (30) des Fortsatzes (18) eine zweite druckregelbare Kammer (26) begrenzt, und wobei die Drücke (p1, p3) der ersten und zweiten druckregelbaren Kammer (24, 26) derart geregelt sind, dass die durch den Druckunterschied zwischen den Kammern (24, 26) entstehende Kraft die durch den Druckunterschied des ersten und des zweiten Bereiches (6, 8) entstehende Kraft auf das zweite Formteil (16) und den Fortsatz (18) ausgleicht.

## Beschreibung

Die Erfindung betrifft eine Dichtvorrichtung zur Abdichtung zweier axial voneinander beabstandeter Bereiche einer Strömungsmaschine gegeneinander.

Eine Strömungsmaschine ist eine Fluidenergiemaschine, bei der die Energieübertragung zwischen Fluid und Maschine in einem offenen Raum durch eine Strömung nach den Gesetzen der Fluiddynamik über den Umweg der kinetischen Energie erfolgt. Strömungsmaschinen umfassen insbesondere Turbinen, die wiederum Gas- und Dampfturbinen umfassen.

In einer Turbine wird die innere Energie (Enthalpie) eines strömenden Fluids (Dampf oder Gas) in Rotationsenergie und letztlich in mechanische Antriebsenergie umwandelt. Dem Fluidstrom wird durch die möglichst wirbelfreie laminare Umströmung der Turbinenschaufeln ein Teil seiner inneren Energie (bestehend aus Bewegungs-, Lage- und Druckenergie) entzogen, der auf die Laufschaufeln der Turbine übergeht.

Über diese wird dann die Welle der Turbine, an der die Laufschaufeln befestigt sind, in Drehung versetzt. Die nutzbare Leistung wird an eine angekuppelte Arbeitsmaschine, wie beispielsweise an einen Generator, abgegeben.

Innerhalb der Turbine sind zum Einschluss des Gases vielfältige Maßnahmen zur Abdichtung erforderlich, insbesondere in den dynamischen Bereichen, d. h. zwischen Gehäuse und beweglicher Welle. Mit verschiedenen Dichtungstypen, wie Bürsten-, Labyrinth-, Spitze-Spitze- und/oder Durchblickdichtungen werden insbesondere bei Dampfturbinen Bereiche, die an die rotierende Welle grenzen, axial voneinander getrennt. Die Bürstendichtung ist hierbei am effektivsten. Jedoch wird befürchtet, dass durch ungleichmäßigen Wärmeeintrag durch Reibung der Bürsten auf der Welle rotordynamische Probleme auftreten. Daher wird die Bürstendichtung nur an sehr ausgewählten Stellen eingesetzt.

Weiterhin ist die Labyrinthdichtung deutlich effektiver als die Spitze-Spitze- oder die Durchblickdichtung. Die Dichtwirkung der Labyrinthdichtung beruht auf strömungstechnischen Effekten durch die Verlängerung des abzudichtenden Spaltes. Die Wegverlängerung wird in der Regel durch ein Ineinandergreifen, die so genannte Verkämmung von Formteilen auf der Welle und dem feststehenden Gehäuseteil erreicht.

Problematisch ist hierbei, dass die Labyrinthdichtung vergleichsweise intolerant bei Verschiebungen der Welle im Betrieb ist. Diese entstehen typischerweise in axialer Richtung auf Grund von thermischer Belastung. Der Abstand und die Kammdichte der Formteile müssen so weit ausgelegt sein, dass Verschiebungen kompensiert werden können. Dadurch verringert sich aber die Dichtwirkung und damit die Effektivität der Dichtung.

Die axialen Verschiebungen nehmen mit zunehmendem Abstand vom Axiallager auf der Welle zu. Daher werden Labyrinthdichtungen insbesondere bei Dampfturbinen üblicherweise nur in der Nähe des Axiallagers eingesetzt. An anderen Wellendichtungen wird die Spitze-Spitze-Dichtung eingesetzt. Auf Grund der geringeren Effektivität der Spitze-Spitze-Dichtungen sind in diesem Fall aber technisch aufwändige Sperr- und Wrasendampfsysteme erforderlich. Außerdem senkt eine geringere Effektivität der Dichtung den Wirkungsgrad der Strömungsmaschine.

Es ist daher Aufgabe der Erfindung, eine Dichtvorrichtung anzugeben, die einen höheren Wirkungsgrad der Strömungsmaschine bei geringerer technischer Komplexität erlaubt.

Diese Aufgabe wird erfindungsgemäß gelöst, indem die Dichtvorrichtung eine Labyrinthdichtung mit einem ersten an einer Welle der Strömungsmaschine angeordneten Formteil und einem zweiten, an einem Gehäuse der Strömungsmaschine axial verschiebbar angeordneten Formteil umfasst, wobei das zweite Formteil einen sich in das Gehäuse erstreckenden Fortsatz aufweist, wobei eine dem ersten Bereich zugewandte erste Oberfläche des Fortsatzes eine erste druckregelbare Kammer begrenzt und eine dem zweiten Bereich zugewandte zweite Oberfläche des Fortsatzes eine zweite druckregelbare Kammer begrenzt, und wobei die Drücke der ersten und zweiten druckregelbaren Kammer derart geregelt sind, dass die durch den Druckunterschied entstehende Kraft die durch den Druckunterschied des ersten und des zweiten Bereiches entstehende Kraft auf das zweite Formteil und den Fortsatz ausgleicht.

Die Erfindung geht dabei von der Überlegung aus, dass ein höherer Wirkungsgrad bei gleichzeitig geringerer technischer Komplexität dadurch erreichbar wäre, wenn auch bei größeren Abständen vom Axiallager ein Einsatz der vergleichsweise effektiveren Labyrinthdichtung möglich wäre. Dazu muss die Labyrinthdichtung aber derart beschaffen sein, dass die axiale Verschiebung der Welle im Betrieb ohne Effektivitätsverlust kompensiert werden kann, d. h. insbesondere ohne großzügigere Auslegung der Verkämmung. Dies ist erreichbar, indem der stationäre Teil der Labyrinthdichtung auf dem Gehäuse ebenfalls axial verschiebbar ausgestaltet wird.

Hierbei ist jedoch sicherzustellen, dass die axiale Verschiebung des Formteils am Gehäuse tatsächlich nur parallel zur axialen Verschiebung der Welle erfolgt und nicht durch die Druckunterschiede zwischen den abzudichtenden axialen Bereichen verursacht wird. Dazu sollten die durch die Druckunterschiede entstehenden Kräfte ausgeglichen werden. Dies ist erreichbar, indem das dem Gehäuse zugeordnete Formteil der Labyrinthdichtung einen sich in das Gehäuse erstreckenden Fortsatz aufweist, wobei eine dem ersten Bereich zugewandte erste Oberfläche des Fortsatzes eine erste druckregelbare Kammer begrenzt und eine dem zweiten Bereich zugewandte zweite Oberfläche des Fortsatzes eine zweite druckregelbare Kammer begrenzt. Durch entsprechende Druckbeaufschlagung der Kammern können dann Kräfte auf den Fortsatz und damit das Formteil ausgeübt werden. Die Drücke der ersten und zweiten druckregelbaren Kammer sind dabei derart geregelt, dass die durch den Druckunterschied zwischen den Kammern entstehende Kraft die durch den Druckunterschied des ersten und des zweiten Bereiches entstehende Kraft auf das zweite Formteil und den Fortsatz ausgleicht.

Vorteilhafterweise umfasst dabei eine Trennwand zwischen erster und zweiter Kammer eine Bürstendichtung. Dadurch lassen sich die Kammern technisch vereinfacht als eine einzige Kammer ausbilden, die lediglich durch die Bürstendichtung voneinander getrennt sind. Die Bürstendichtung kann dabei entweder am Gehäuse oder aber an dem Fortsatz selbst angeordnet werden.

Die Bürstendichtung zwischen den Kammern bietet zudem den weiteren Vorteil, dass eine Fixierung des Formteils in radialer Richtung besonders einfach zu bewerkstelligen ist: Vorteilhafterweise ist dazu die Bürstendichtung derart angeordnet, dass die jeweilige radiale Projektion der Oberfläche des Fortsatzes, die an die jeweiligen Kammern angrenzen, in derjenigen Kammer am größten ist, in der im Betriebszustand der Strömungsmaschine der höchste Druck herrscht. Durch den höheren Druck wird der Fortsatz und damit das Formteil in radialer Richtung zum Zentrum der Strömungsmaschine gedrückt.

Eine technisch besonders einfache Ausgestaltung der Dichtvorrichtung ist möglich, indem vorteilhafterweise der Druck in der ersten Kammer dem Druck im zweiten abzudichtenden Bereich entspricht und der Druck in der zweiten Kammer dem Druck im ersten abzudichtenden Bereich entspricht. Somit kann der Druck in den Kammern durch einfache Verbindungsleitungen eingestellt werden. Sind dann in weiterer vorteilhafter Ausgestaltung die Flächen der jeweiligen axialen Projektion jeweils der
- dem ersten Bereich zugewandten Oberfläche in der jeweiligen Kammer und der an den zweiten Bereich angrenzenden Oberfläche und der
- dem zweiten Bereich zugewandten Oberfläche in der jeweiligen Kammer und der an den ersten Bereich angrenzenden Oberfläche
des zweiten Formteils und des Fortsatzes gleich, werden die Kräfte stets ausgeglichen, da durch gleiche Flächen und gegengleiche Drücke jeweils die gleichen, entgegengesetzt wirkenden Kräfte erzeugt werden. Dadurch ist mit besonders einfachen Mitteln ein Ausgleich der durch den Druckunterschied in den abzudichtenden Bereichen entstehenden Kräfte erreicht.

Zur Verschiebung des dem Gehäuse zugeordneten Formteils der Labyrinthdichtung parallel zur Verschiebung der Welle ist diesem vorteilhafterweise eine Axialverschiebeeinrichtung zugeordnet. Dadurch lässt sich das Formteil in axialer Richtung parallel zur Verschiebung der Welle bewegen und die Labyrinthdichtung kann mit entsprechend geringem Spiel ausgelegt werden. Durch den Ausgleich der axialen Kräfte, die durch den Druckunterschied der abzudichtenden Bereiche verursacht werden, kann die Axialverschiebeeinrichtung vergleichsweise einfach ausgelegt werden, da sie keine großen Kräfte erzeugen muss.

In vorteilhafter Ausgestaltung umfasst die Axialverschiebeeinrichtung einen Magneten. Durch eine magnetische Kraftübertragung insbesondere mittels Permanentmagneten kann die Verschiebung des dem Gehäuse zugeordneten Formteils berührungslos erfolgen.

In weiterer vorteilhafter Ausgestaltung ist einer der abzudichtenden Bereiche mit der Labyrinthdichtung nur über einen Kanal verbunden, wobei der Kanal ein Dichtelement aufweist, das derart ausgebildet ist, dass seine Dichtwirkung von der axialen Abweichung des zweiten Formteils von der Welle abhängig ist. Dadurch ist es möglich, eine automatische Verschiebung des dem Gehäuse zugeordneten Formteils über Erzeugung einer entsprechenden Druckdifferenz und damit Kraft zu erreichen. Der Druck im Kanal wird dann nämlich von der Dichtwirkung des Dichtelements beeinflusst und kann zur Kraftgenerierung für die automatische Verschiebung genutzt werden.

Vorteilhafterweise erstreckt sich eine mit der Welle verbundene Wand des Kanals zumindest teilweise in radialer Richtung und das Dichtelement ist an dem zweiten Formteil derart angeordnet, dass seine axiale Bewegungsachse die Wand des Kanals trifft. Verschiebt sich die Welle nämlich in Richtung des an den Kanal angrenzenden Bereiches, entfernt sich die mit der Welle verbundene Wand von dem Dichtelement, so dass dessen Dichtwirkung nachlässt. Dadurch sinkt der Druck in dem Kanal. Die axialen Kräfte am Formteil sind nicht mehr ausgeglichen und schieben das Formteil in die gleiche Richtung wie die Welle. Der Spalt im Dichtelement bleibt somit konstant. Das beschriebene axiale Verschieben funktioniert insbesondere dann, wenn über dem Dichtelement eine Druckdifferenz anliegt. Diese ist bei Wellendichtungen im Außengehäuse auch beim An- und Abfahren der Strömungsmaschine durch Sperrbedampfung und laufende Evakuierung möglich.

In vorteilhafter Ausgestaltung umfasst eine Strömungsmaschine eine beschriebene Dichtvorrichtung.

Die mit der Erfindung erzielten Vorteile bestehen insbesondere darin, dass durch den Ausgleich der Druckunterschiede und die automatische Verschiebung der Dichtung zwischen den abzudichtenden axialen Bereichen einer Strömungsmaschine der Einsatz von Labyrinthdichtungen auch dort möglich wird, wo vergleichsweise große axiale Verschiebungen der Welle im Betrieb vorkommen. Die Labyrinthdichtung hat gegenüber der bisher ausgeführten Spitze-Spitze-Dichtung eine deutlich bessere Dichtwirkung, auch bei großen axialen relativen Dehnungen. Dies bedeutet eine Turbinen-Mehrleistung. Zusätzlich vereinfacht sich die Auslegung des Sperrdampf- und Wrasendampfsystems. Es kann gegebenenfalls ein kleineres Wrasendampfgebläse gewählt werden.

Die Erfindung wird anhand einer Zeichnung näher erläutert. Darin zeigen:
- FIG 1: einen Schnitt durch die obere Hälfte einer Strömungsmaschine mit einer ersten Ausführungsform, und
- FIG 2: einen Schnitt durch die obere Hälfte einer Strömungsmaschine mit einer zweiten Ausführungsform.

Gleiche Teile sind in beiden Figuren mit denselben Bezugszeichen versehen.

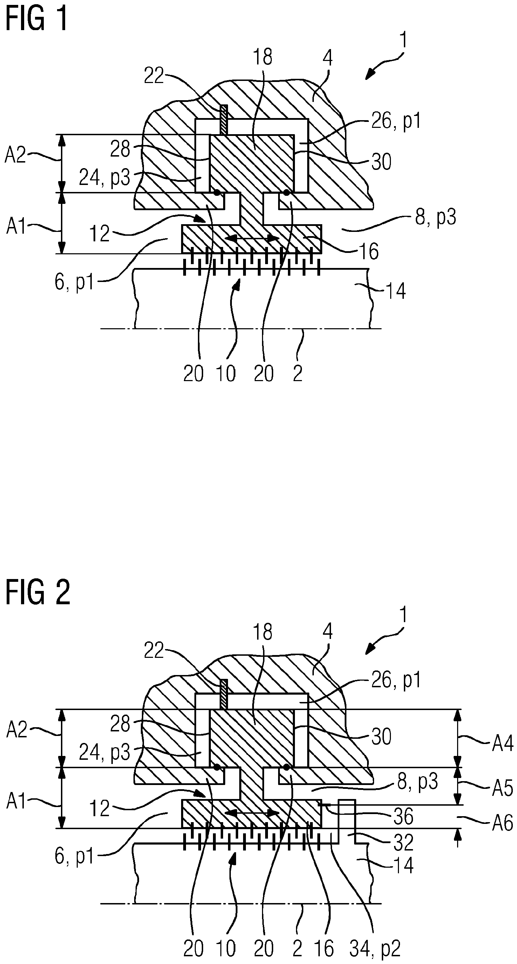

Die FIG 1 zeigt einen Schnitt durch die obere Hälfte einer Strömungsmaschine 1, in den Ausführungsbeispielen eine Dampfturbine. Die Schnittebene verläuft dabei axial-radial. In der Achse der Strömungsmaschine 1 ist die Welle 2 angeordnet. An dieser sind die nicht näher gezeigten Laufschaufeln der Dampfturbine befestigt. Weiterhin bildet die Welle 2 außerhalb der gezeigten Dampfturbine die Verbindung zu weiteren Dampfturbinen und dem Generator einer Kraftwerksanlage.

Um die Welle herum ist das feststehende Gehäuse 4 angeordnet. Axial voneinander beabstandet sind ein erster Bereich 6 und ein zweiter Bereich 8, in denen im Betrieb der Dampfturbine unterschiedliche Drücke p1 bzw. p3 herrschen. Der Druck p1 ist größer als der Druck p3. Die Bereiche 6, 8 sollen gegeneinander abgedichtet werden.

Um eine besonders gute Dichtwirkung für einen hohen Wirkungsgrad der Dampfturbine zu erreichen, soll eine Labyrinthdichtung 10 eingesetzt werden. Damit diese mit besonders geringem Spiel ausgelegt werden kann, soll die Dichtung so ausgestaltet sein, dass die Labyrinthdichtung 10 die axiale relative Verschiebung von Welle 2 und Gehäuse 4 kompensieren kann.

Dies ermöglicht die Dichtvorrichtung 12 gemäß der FIG 1 und FIG 2. Die Labyrinthdichtung 10 umfasst ein erstes, an der Welle 2 angeordnetes Formteil 14 sowie ein zweites, dem Gehäuse 4 zugeordnetes Formteil 16. Das Formteil 16 hat einen sich in das Gehäuse 4 erstreckenden Fortsatz 18. Dieser ist im Gehäuse 4 axial verschiebbar gelagert. Er weist eine T-Form auf, die in Nasen 20 des Gehäuses in beiden axialen Richtungen eingreift. Die Form der Nasen 20 und des Fortsatzes 18 ist so gewählt, dass einerseits ein dampfdichter Abschluss zu den Bereichen 6, 8 möglich ist und andererseits ein Verkippen des Fortsatzes ausgeschlossen ist.

Um den oberen Teil des Fortsatzes 18 herum ist ein Freiraum angeordnet, der durch eine an der radialen Außenfläche des Fortsatzes angeordnete Bürstendichtung 22 in eine erste und eine zweite Kammer 24, 26 geteilt wird. Die Kammer 24 begrenzt dabei die dem ersten Bereich 6 zugewandte Oberfläche 28 des oberen Teiles des Fortsatzes 18, die Kammer 26 begrenzt die dem zweiten Bereich 8 zugewandte Oberfläche 30 des oberen Teiles des Fortsatzes 18.

Zum Ausgleich der Kräfte durch die Druckdifferenz von p1 und p3 ist nun die Kammer 24 mit dem Druck p3 beaufschlagt, die Kammer 26 mit dem Druck p1. Dies kann durch einfache, nicht gezeigte Verbindungsleitungen mit den Bereichen 8 bzw. 6 geschehen. Dadurch, dass die radiale Außenfläche des Fortsatzes 18 durch die entsprechende Anordnung der Bürstendichtung 22 in der Kammer 26 größer ist als in der Kammer 24, wird der Fortsatz 18 mit dem Formteil 16 durch den hohen Druck p1 stets in Richtung der Welle 2 gepresst.

Gleichzeitig entspricht die Fläche A2 der Oberflächen 28, 30 exakt der Fläche A1 der axialen Projektion des Formteils 16 und dessen Fortsatz 18, soweit diese an die Bereiche 6 bzw. 8 angrenzen. Da die Drücke in den Kammern 24, 26 somit gegengleich zu den Drücken in den Drücken in den Bereich 6, 8, während die Flächen A1, A2 gleich sind. Dadurch werden die Kräfte auf Formteil 16 und Fortsatz 18 ausgeglichen. Eine Verschiebung des Formteils 16 ist nun mit einer nicht näher dargestellten Axialverschiebeeinrichtung mit Permanentmagneten möglich.

FIG 2 zeigt ein weiteres Ausführungsbeispiel. Hierbei wird im Folgenden nur auf die Unterschiede zur FIG 1 eingegangen.

Die Dichtvorrichtung 12 gemäß FIG 2 zeigt zusätzlich eine an der Welle 2 im Bereich 8 angeordnete Wand 32, die sich in radialer Richtung nach außen erstreckt. Dadurch bildet sich zwischen Wand 32 und Formteil 16 ein Kanal 34. Der Kanal 34 ist mit einem Dichtelement 36 gegen den Bereich 8 abgedichtet. Der Kanal 34 wird während des Betriebs von der Labyrinthdichtung 14 mit Dampf gespeist und über das Dichtelement 36 entleert. Im Kanal 34 stellt sich somit ein Druck p2 ein, der zwischen dem Druck p1 (vor der Labyrinthdichtung 14) und dem Druck p3 (hinter dem Dichtelement 36) liegt. Der Druckabfall über das Dichtelement 36 fällt mit dem Abstand des Formteils 16 und der Wand 32; der Druck p2 gleicht sich dem Druck p3 an.

An dem Formteil 16 wirken über den Druck p1 auf die Flächen A1 und A4, über den Druck p2 auf die Fläche A6 und mit dem Druck p3 auf die Flächen A2 und A5. Die Flächen A1, A2, A4, A5 und A6 sind so austariert, dass das Formteil 16 und den Fortsatz 18 bezüglich der Drücke p1, p2 und p3 kraftfrei sind.

Verschiebt sich die Welle 2 von dem Ort 6 hin zum Ort 8, vergrößert sich der Spalt im Dichtelement 36. Die daraus resultierende größere Entleerung senkt den Druck p2, der mit der Fläche A6 axial auf das Formteil 16 wirkt. In der Folge wird das Formteil 16 von Ort 6 hin zum Ort 8 durch die nun nicht mehr ausgeglichenen Druckkräfte verschoben, bis sich wieder ein Gleichgewicht einstellt.

Sofern über dem Dichtelement 36 keine Druckdifferenz anliegt, kommt auch hier die zusätzliche Axialverschiebeeinrichtung zur Anwendung.

## Patentansprüche

1. Dichtvorrichtung (12) zur Abdichtung zweier axial voneinander beabstandeter Bereiche (6, 8) einer Strömungsmaschine (1) gegeneinander, umfassend eine Labyrinthdichtung (10) mit einem ersten an einer Welle (2) der Strömungsmaschine (1) angeordneten Formteil (14) und einem zweiten, an einem Gehäuse (4) der Strömungsmaschine (1) axial verschiebbar angeordneten Formteil (16),
wobei das zweite Formteil (16) einen sich in das Gehäuse (4) erstreckenden Fortsatz (18) aufweist,
wobei eine dem ersten Bereich (6) zugewandte erste Oberfläche (28) des Fortsatzes (18) eine erste druckregelbare Kammer (24) begrenzt und eine dem zweiten Bereich (8) zugewandte zweite Oberfläche (30) des Fortsatzes (18) eine zweite druckregelbare Kammer (26) begrenzt, und
wobei die Drücke (p1, p3) der ersten und zweiten druckregelbaren Kammer (24, 26) derart geregelt sind, dass die durch den Druckunterschied zwischen den Kammern (24, 26) entstehende Kraft die durch den Druckunterschied des ersten und des zweiten Bereiches (6, 8) entstehende Kraft auf das zweite Formteil (16) und den Fortsatz (18) ausgleicht.

2. Dichtvorrichtung (12) nach Anspruch 1,
bei der eine Trennwand zwischen erster und zweiter Kammer (24, 26) eine Bürstendichtung (22) umfasst.

3. Dichtvorrichtung (12) nach Anspruch 2,
bei der die Bürstendichtung (22) derart angeordnet ist, dass die jeweilige radiale Projektion der Oberfläche des Fortsatzes (18), die an die jeweiligen Kammern (24, 26) angrenzen, in derjenigen Kammer (26) am größten ist, in der im Betriebszustand der Strömungsmaschine (1) der höchste Druck (p1) herrscht.

4. Dichtvorrichtung (12) nach einem der vorhergehenden Ansprüche,
bei der der Druck (p3) in der ersten Kammer (24) dem Druck (p3) im zweiten Bereich (8) entspricht und der Druck (p1) in der zweiten Kammer (26) dem Druck (p1) im ersten Bereich (6) entspricht.

5. Dichtvorrichtung (12) nach Anspruch 4,
bei der die Flächen (A1, A2) der jeweiligen axialen Projektion jeweils der
- ersten Oberfläche (28) und der den zweiten Bereich (8) angrenzenden Oberfläche und der
- zweiten Oberfläche (30) und der an den ersten Bereich (6) angrenzenden Oberfläche
des zweiten Formteils (16) und des Fortsatzes (18) gleich sind.

6. Dichtvorrichtung (12) nach einem der vorhergehenden Ansprüche,
mit einer dem zweiten Formteil (16) zugeordneten Axialverschiebeeinrichtung.

7. Dichtvorrichtung (12) nach Anspruch 6,
bei der die Axialverschiebeeinrichtung einen Magneten umfasst.

8. Dichtvorrichtung (12) nach einem der vorhergehenden Ansprüche,
bei dem einer der Bereiche (8) mit der Labyrinthdichtung (14) nur über einen Kanal (34) verbunden ist,
wobei der Kanal (34) ein Dichtelement (36) aufweist, das derart ausgebildet ist, dass seine Dichtwirkung von der axialen Abweichung des zweiten Formteils (16) von der Welle (2) abhängig ist.

9. Dichtvorrichtung (12) nach Anspruch 8,
bei dem eine mit der Welle (2) verbundene Wand (32) des Kanals (34) sich zumindest teilweise in radialer Richtung erstreckt und das Dichtelement (36) an dem zweiten Formteil (16) derart angeordnet ist, dass seine axiale Bewegungsachse die Wand (32) des Kanals (34) trifft.

10. Strömungsmaschine (1) mit einer Dichtvorrichtung (12) nach einem der vorhergehenden Ansprüche.
